# EUROPEAN PATENT SPECIFICATION

(11) **EP 1 719 941 B1**
(45) Date of publication and mention of the grant of the patent: **10.08.2011**
(21) Application number: 05710569.4
(22) Date of filing: 23.02.2005
(51) Int. Cl.: F16L 21/02, F16L 33/00, F16L 33/28

(54) **PIPE JOINT**
ROHRVERBINDUNG
RACCORD POUR TUYAU

(30) Priority: 23.02.2004 JP 2004046239
(43) Date of publication of application: 08.11.2006
(73) Proprietor: Bridgestone Corporation, Tokyo 104-8340 (JP); Bridgestone Flowtech Corporation, Kazo-shi Saitama 3470017 (JP)
(72) Inventor: HOSODA, Yukihiro, c/o BRIDGESTONE CORPORATION, Tokyo 1048340 (JP); NAGAYAMA, Tomohisa, c/o BRIDGEST0NE CORPORATION, Tokyo 1048340 (JP); MINAGAWA, Koichi, c/o BRIDGEST0NE FLOWTECH CORP., Kazo-shi, Saitama 3470017 (JP); MINE, Kenji, c/o BRIDGEST0NE FLOWTECH CORPORATION, Kazo-shi, Saitama 3470017 (JP)
(74) Representative: Whalley, Kevin
(86) International application number: PCT/JP2005/002876
(87) International publication number: WO 2005/080854

(56) References cited:
- EP-A- 1 004 805
- JP-A- 10 220 665
- JP-A- 2001 159 492
- JP-A- 2001 310 999
- JP-A- 2002 156 080
- JP-A- 2002 228 069
- JP-A- 2002 310 364
- JP-A- 2002 357 295

## Description

### Technical Field

The present invention relates to an improvement of a pipe coupling. More particularly, the present invention relates to a pipe coupling with which it can be easily determined whether or not a pipe is fully inserted into the coupling.

### Background Art

In recent years, a technique has been developed in which a flexible pipe (hereinafter, referred to simply as a "pipe"), which is formed of a resin such as polybutene or cross-linked polyethylene, is used as a water or hot water-supply pipe in a multiple dwelling house or a single house. In order to connect such a pipe to a header or various types of tool, a coupling including an O-ring that contacts the surface of the pipe to block water; and a pipe holding member (hereinafter, referred to simply as a "holding member") that bites into an outer surface of the pipe to prevent removal of the pipe from the coupling when a water pressure is applied thereto, is used (Patent Document 1).

However, since the holding member as well as the O-ring must be kept in tight contact with the surface of the pipe, a relatively high resistance to insertion is generated when the pipe is inserted into the coupling. Therefore, if the resistance to insertion is large, a case may occur in which the pipe is mistakenly thought to be fully inserted into the coupling, and used without in fact being fully inserted into the coupling. Such an imperfect insertion of the pipe may be a major factor causing water leakage.

Although field workers are always warned to pay due attention in this regard, the problem remains in evidence. In this respect, there have been cases in which the outer surface of a pipe is marked with an indicator line showing the length between the tip end position and the insertion position of the pipe. However, this has not eliminated mistakes.

Therefore, a pipe coupling through which the insertion of a pipe can be visually observed has been developed. However, description has mainly beet made of observation holes in the pipe coupling and no description has been made of a specific example of a resin collar (Patent Document 2).
Patent Document 1: Japanese Patent Application (JP-A) No. 11-118081
Patent Document 2: Japanese Patent Application No 2002-5373
Document JP 2002 310364 discloses a one-touch joint with a base body, an inner cylinder that is fitted into an inner circumference of a pipe, an o-ring fitted onto an outer surface of the inner cylinder and a pipe holding member. JP 2002 357295 discloses a pipe joint.

### Disclosure of the Invention

### Problems to be Solved by the Invention

In order to solve the aforementioned drawbacks, an object of the present invention is to provide a pipe coupling with which it can be easily determined whether or not a pipe is fully inserted into a coupling.

### Means for Solving the Problems

In order to solve the aforementioned problems, the invention is constituted as described below. That is, the invention relates to a pipe coupling comprising an O-ring that is brought into contact with a surface of a pipe to block water; and a pipe holding member that bites into an outer surface of the pipe to prevent removal of the pipe from the coupling when water pressure is applied thereto, wherein a portion of the pipe coupling that corresponds to a tip end position of the pipe when the pipe is fully inserted into the pipe coupling is formed of a resin which has high transparency and through which the tip end of the pipe can be visually observed

According to the present invention, there invention, there is provided a pipe coupling as claimed in claim 1.

### Effect of the Invention

In accordance with the invention, at least a portion of a pipe coupling corresponding to a tip end position of the pipe inserted into the coupling is formed of a transparent resin. Therefore, an operator can easily determine whether or not the pipe is fully inserted into the coupling through a visual observation. Accordingly, the occurence of water leakage due to operational mistakes can be reduced.

### Brief Description of the Drawings

[Fig.1] Fig. 1 is a lateral cross-sectional view of a pipe coupling according to one embodiment of the present invention.
[Fig. 2] Fig. 2 is an exploded cross-sectional view of Fig. 1.
[Fig. 3] Fig. 3 is a lateral cross-sectional view of a pipe coupling not part of the present invention and present only to assist in the understanding of the present invention.

### Best Mode for Carryring Out the Invention

The invention achieved a pipe coupling enabling visual confirmation of whether or not a pipe inserted into the coupes is inserted to a predetermined position.

### (Embodiments)

Hereinafter, with reference to drawings, a pipe coupling according to an embodiment of the present invention will be explained.

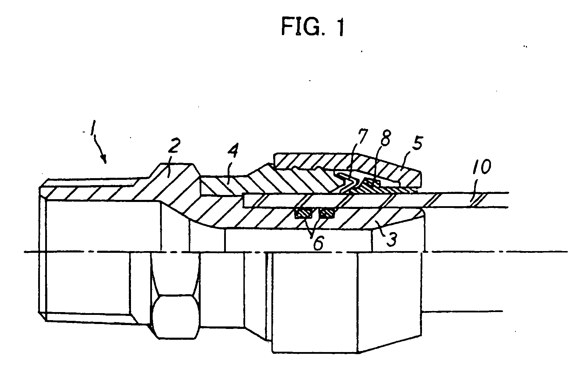

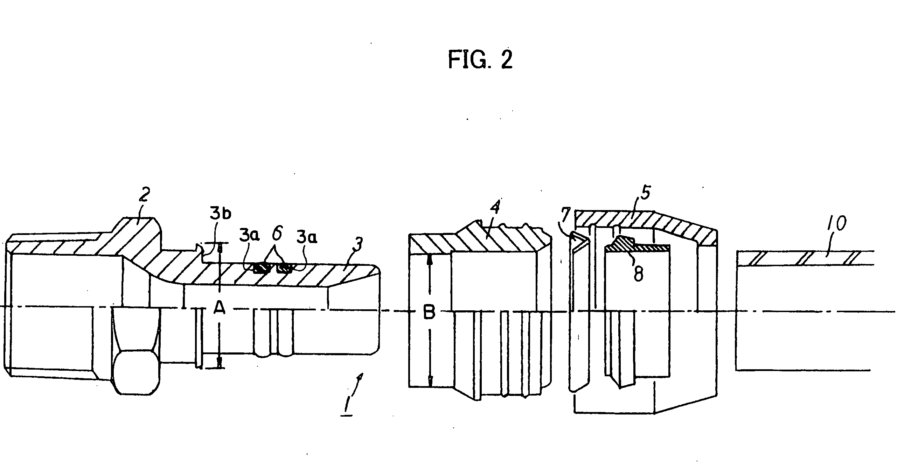

Fig. 1 shows a lateral cross-sectional view of such a pipe coupling 1, and Fig. 2 shows an exploded thereof, wherein reference numeral 2 denotes a pipe coupling base body, 3 denotes an inner cylinder extending from the pipe coupling base body, 4 denotes a cylindrical resin collar, and 5 denotes a sleeve. The pipe coupling base body 2 and the inner cylinder 3 are formed of gun metal, and the resin collar 4 is a transparent collar which is formed by TROGAMID CX7323. The sleeve 5 is formed of polyacetal.

The pipe coupling base body 2 and the resin collar 4 are usually fixed to each other by press-fitting, and the resin collar 4 and the sleeve 5 are fixed to each other by press-fitting (screwed together if needed). Further, reference numeral 10 denotes a pipe.

On the surface of the inner cylindrer 3 are formed two circumferential grooves 3a into which an O-ring 6 is fitted. A pipe holding member, denoted by reference numeral 7, bites into an outer surface of the pipe 10 and has a pawl that can prevent removal of the pipe 10 from the pipe coupling 1. Further, reference numeral 8 denotes a pipe release ring which is used for pulling out the pipe 10. By pushing the pipe release ring 8 inward of the pipe coupling 1, a state in which the pawl of the pipe holding member 7 bites into the outer surface of the pipe is cancelled, and the pipe is then pulled out with this state maintained.

The inner cylinder 3 is inserted into the pipe 10 and the tip end of the pipe 10 rides over the O-ring 6. Then, when the pipe 10 is further inserted into the coupling, the tip end of the pipe 10 can be visually observed through the resin collar 4. By this, it is confirmed that the tip end of the pipe 10 has reached a step portion 3b which is it is confirmed that the tip end of the pipe 10 has reached a step portion 3b which is formed at the deepeat portion of the inner cylinder 3, and full insertion of the pipe 10 into the coupling 1 can be visually observed.

Here, press fit interference (%) is represented by an expression of {(A-B)/B}×100, and a press fit interference of from 3 to 5% can satisfy conditions such as tensional performance and hot internal pressure creep property required for the coupling.

Another example of the pipe coupling 1 according to an embodiment of the present invention will be explained next. Structures and operations identical to those in the first embodiment are denoted by the same reference numerals, and description thereof will be omitted.

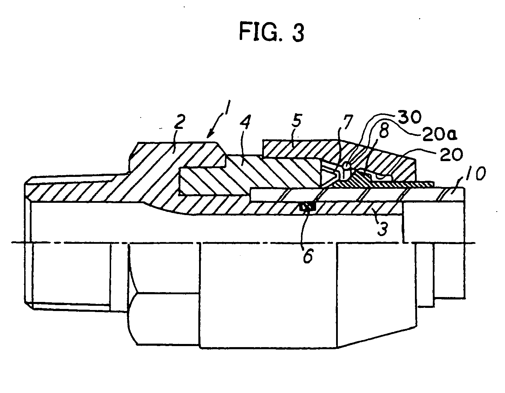

Fig. 3 shows an embodiment of a lateral cross-sectional view of a pipe coupling not part of the present invention and present only to assist in the understanding of the present invention. The present embodiment is basically structured in the same manner as in the first embodiment except for the following respects.

In the same manner as in the first embodiment described above, reference numeral 2 denotes a pipe coupling base body, 3 denotes an inner cylinder extending from the pipe coupling base body, 4 denotes a cylindrical resin collar, and 5 denotes a sleeve. Further, reference numeral 20 denotes an inclined wall which is formed at an inner circumference of the sleeve 5, and 20a denotes a step portion which is formed at the inclined wall 20. A metal protection ring 30 is attached to the step portion 20a.

In the present embodiment, the pipe coupling base body 2 is formed into a substantially U shape as seen from a side view, to cover an upper surface of the resin collar 4 (i.e., the upper side surface of the resin collar 4 in Fig. 3). Namely, when the pipe coupling base body 2 and the resin collar 4 are fitted to each other by press-fitting, a portion of the resin collar 4 is structured to fit into a concave portion of the pipe coupling base body 2. Accordingly, protection of the resin collar 4 as well as the total strength of the pipe coupling 1 can be enhanced.

The O-ring 6 is fit into the circumferential grooves formed on the surface of the inner cylinder 3. A pipe holding member, denoted by reference numeral 7, bites into the outer surface of the pipe 10, and has a pawl that can prevent removal of the pipe 10 from the pipe coupling 1.

Further, reference numeral 8 denotes a pipe release ring which is used for pulling out the pipe 10. By pushing the pipe release ring 8 inward of the pipe coupling 1, a state in which the pawl of the pipe holding member 7 bites into the outer surface of the pipe is cancelled, and the pipe is then pulled out with this state maintained.

Further, since the protection ring 30 is attached to the step portion 20a of the inclined wall 20 of the sleeve 5, when the pipe 10 is pulled from the pipe coupling 1 in a direction in which the pipe 10 is pulled out (in a right-hand direction of Fig. 3), the pipe holding member 7 and the pipe release ring 8 abut with each other and move, together with the pipe 10, in the direction in which the pipe 10 is pulled out. However, the outer circumferential inclined surface of the pipe holding member 7 abuts with the protection ring 30, and does not contact the inner circumferential inclined surface of the sleeve 5. Accordingly, even if the sleeve 5 is formed of a resin, damage caused to the inner circumferential inclined surface 20 can be prevented.

Other portions are identical to those in Fig. 1, and description thereof will be omitted.

As described above, the invention can provide a pipe coupling which enables visual confirmation of whether or not the pipe inserted into the coupling is inserted to a predetermined position. Therefore, the invention has a specific structure such that a transparent ring-shaped resin collar, which corresponds to a tip end position of the pipe to provide a visual observation, is built into the pipe coupling. Although the entire coupling can certainly be formed of a resin having high transparency, the greatest effect of the present invention is that the tip end of the pipe can be visually observed through the coupling.

In the present invention, a sealing mechanism generally uses an O-ring. However, either of the inner surface or the outer surface of the pipe which is to be inserted can be used for sealing. The above-described Example is a more specific example of a structure in which the inner surface of the pipe is used for sealing.

Such a pipe coupling is usually formed of a metal or a resin. However, from the standpoints of light weight, easiness to mold or cost performance, pipe couplings formed of a resin can also be employed. Such pipe couplings can be obtained by injection molding of a resin such as a PPS resin, a polybutene resin or a PP resin.

The material used for visual observation is manufactured using a transparent resin. Therefore, in order to fix a coupling base body and a resin having high transparency to each other, press-fitting is generally used. However, press fit interference of at least 3 to 5% is needed to satisfy the strength of, for example, tensional performance or hot internal pressure creep property. Accordingly, it is found that a material having transparency used herein should, in particular, have a yield point elongation of 5% or more, and preferably 7%. Considering this point, a resin material reinforced by glass or the like suffers a significant drawback because such a material has poor elongation, and may crack easily during a press-fitting operation. Generally, cracks may occur at a yield point elongation of 2 to 3%.

Examples of transparent resins include resins having heat resistance and transparency such as PPSU (polyphenyl sulfone), PES (polyether sulfone), denatured PPE (denatured polyphenylene ether), PEI (polyether imide) and PC (polycarbonate). Among these non-crystalline resins, for example, PPSU is used as necessary. However, there is a concern that ESC (Environmental Stress Cracking) may occur due to a combined action of stress within the PPSU resin and a surfactant component contained in a lubricant used in field applications.

Further, although resins such as PSU (polysulfone), PPSU, PES and PPE are non-colored and transparent, they exhibit amber color or the like in a natural state. Accordingly, it becomes difficult to recognize the color of the pipe, and the pipe is often mistaken as the inner cylinder of the coupling thus leading to a possibility in which a confirmation of a manufacturing state may be insufficient.

A micro-crystalline polyamide resin is selected as a resin for satisfying design requirements particularly required for transparent resins of the present invention, such as elongation of material and resistance to stress cracking, and more specifically, as a resin for satisfying tensional performance and hot internal pressure creep property with a large yield point elongation (6% or more) and a press fit interference of 3 to 5%.

Namely, the micro-crystalline polyimide resin is capable of preventing occurrence of ESC, and satisfying all the performances required from standpoints of elongation at the time of press-fitting, transparency, resistance to hot internal pressure creep property, and resistance to ESC. Description of the press fit interference is identical to that of the paragraph [0017]. Moreover, micro-crystalline polyamide is colorless and transparent in a non-colored state thus making it easy to recognize the color of a pipe and preventing the pipe from being mistaken as the inner cylinder or the like of the coupling main body. Accordingly, it can be said that micro-crystalline polyamide is a more suitable resin for confirming states of use in the field.

A specific example of a micro-crystalline polyamide which is suitable for the transparent resin of the invention is a polyamide resin (Trogamide CX7323) manufactured by Daicel-Degussa Ltd. This resin is colorless and transparent and is extremely excellent in chemical resistance, impact resistance, climate resistance, and dimensional stability, and is generally formed by an injection molding, such that all the requirements for the pipe coupling are satisfied.

### Industrial Applicability

The pipe coupling of the present invention enables the insertion of a pipe into the coupling to be visually observed, is applicable to couplings for pipes formed of a resin as well as those formed of various other materials, and can be used in an extremely wide range of applications.

## Claims

1. A pipe (1) coupling comprising:
a coupling base body (2);
an inner cylinder (3) that extends from the coupling base body (2) and that is fitted into an inner circumference of a pipe;
an O-ring (6) that is fitted onto an outer surface of the inner cylinder (3);
a transparent resin collar (4) that corresponds to a tip end position of the pipe (when the pipe is fully inserted onto the inner cylinder (3), is fixed to the coupling base body (2), and through which the tip end of the pipe can be visually observed;
a pipe holding member (7) disposed at the tip end of the resin collar (4) to hold the pipe;
a pipe release ring (8) disposed at the tip end of the resin collar (4);
a sleeve (5) that is attached to the resin collar(4) so as to cover at least a portion of the resin collar (4), the pipe holding member (7) and the pipe release ring (8);
and
wherein a distal end portion of the pipe release ring (8) with respect to the resin collar (4) is formed so as to be placed around the pipe when the pipe is fully inserted into the inner cylinder (3), and the distal end portion is positioned further inward along an axial direction of the pipe than a distal end portion of the sleeve (5) with respect to the resin collar (4).

2. The pipe coupling (1) according to claim 1, wherein the resin collar (4) is fixed to the coupling base body (2) with press fitting, and a yield point elongation of the resin having high transparency is 5% or more.

3. The pipe coupling (1) according to claim 1 or 2, wherein the resin having high transparency is micro-crystalline polyamide.

4. The pipe coupling (1) according to any one of claims 1 to 3, wherein the coupling base body (2) is formed of a PPS resin.

## Patentansprüche

1. Rohrverbindung (1), die aufweist:
einen Verbindungsgrundkörper (2);
einen Innenzylinder (3), der sich vom Verbindungsgrundkörper (2) erstreckt, und der in einen Innenumfang eines Rohres eingepasst ist;
einen O-Ring (6), der auf eine Außenfläche des Innenzylinders (3) angepasst ist;
einen Bund (4) aus durchsichtigem Harz, der einer Kopfendposition des Rohres entspricht, wenn das Rohr vollständig auf dem Innenzylinder (3) eingesetzt ist, am Verbindungsgrundkörper (2) befestigt ist, und wobei durch diesen das Kopfende des Rohres visuell beobachtet werden kann;
ein Rohrhalteelement (7), das am Kopfende des Harzbundes (4) angeordnet ist, um das Rohr zu halten;
einen Rohrfreigabering (8), der am Kopfende des Harzbundes (4) angeordnet ist;
eine Muffe (5), die am Harzbund (4) befestigt ist, um so mindestens einen Teil des Harzbundes (4), des Rohrhalteelementes (7) und des Rohrfreigaberinges (8) zu bedecken; und
wobei ein distaler Endabschnitt des Rohrfreigaberinges (8) in Bezug auf den Harzbund (4) so ausgebildet ist, dass er um das Rohr herum angeordnet wird, wenn das Rohr vollständig in den Innenzylinder (3) eingesetzt ist, und wobei der distale Endabschnitt weiter nach innen längs einer axialen Richtung des Rohres als ein distaler Endabschnitt der Muffe (5) in Bezug auf den Harzbund (4) positioniert ist.

2. Rohrverbindung (1) nach Anspruch 1, bei der der Harzbund (4) am Verbindungsgrundkörper (2) mit einer Presspassung befestigt ist, und wobei eine Fließgrenzdehnung des Harzes mit einer hohen Durchsichtigkeit 5 % oder mehr beträgt.

3. Rohrverbindung (1) nach Anspruch 1 oder 2, bei der das Harz mit einer hohen Durchsichtigkeit ein mikrokristallines Polyamid ist.

4. Rohrverbindung (1) nach einem der Ansprüche 1 bis 3, bei der der Verbindungsgrundkörper (2) aus einem PPS-Harz gebildet wird.

## Revendications

1. Raccord pour tuyau (1) comprenant:
un corps de base de raccord (2);
un cylindre intérieur (3) qui s'étend à partir du corps de base de raccord (2) et qui est inséré dans une circonférence intérieure d'un tuyau;
un joint torique (6) qui est monté sur une surface extérieure du cylindre intérieur (3);
un collier en résine transparente (4) qui correspond à une position de l'extrémité du tuyau lorsque le tuyau est totalement inséré sur le cylindre intérieur (3), est fixé sur le corps de base de raccord (2) et à travers lequel l'extrémité du tuyau peut être vue;
un élément de maintien du tuyau (7) disposé à l'extrémité du collier en résine (4) pour maintenir le tuyau;
une bague de libération du tuyau (8) disposée à l'extrémité du collier en résine (4);
une douille (5) qui est fixée sur le collier en résine (4) de manière à couvrir au moins une partie du collier en résine (4), l'élément de maintien du tuyau (7) et la bague de libération du tuyau (8); et
dans lequel une partie d'extrémité distale de la bague de libération du tuyau (8), par rapport au collier en résine (4), est formée de manière à entourer le tuyau lorsque celui-ci est totalement inséré sur le cylindre intérieur (3), et la partie d'extrémité distale est située plus à l'intérieur, le long d'une direction axiale du tuyau, qu'une partie d'extrémité distale de la douille (5) par rapport au collier en résine (4).

2. Raccord pour tuyau (1) selon la revendication 1, dans lequel le collier en résine (4) est fixé sur le corps de base de raccord (2) par ajustement serré et la limite d'allongement de la résine à haut degré de transparence est égale ou supérieure à 5%.

3. Raccord pour tuyau (1) selon la revendication 1 ou 2, dans lequel la résine à haut degré de transparence est une polyamide microcristalline.

4. Raccord pour tuyau (1) selon l'une quelconque des revendications 1 à 3, dans lequel le corps de base de raccord (2) est formé d'une résine PPS.
